# EUROPEAN PATENT APPLICATION

(11) **EP 1 947 636 A1**
(43) Date of publication of application: **23.07.2008**
(21) Application number: 06822042.5
(22) Date of filing: 23.10.2006
(51) Int. Cl.: G09G 5/00, B60K 35/00, B60R 16/02, G01C 21/00, G06F 3/041, G06F 3/048, G06F 3/14, G08G 1/0969, G09G 3/20, G09G 3/36, G09G 5/36, G09G 5/377

(54) **DISPLAY DEVICE AND NAVIGATION DEVICE**

(30) Priority: 07.11.2005 JP 2005322644
(71) Applicant: MATSUSHITA ELECTRIC INDUSTRIAL CO., LTD., Osaka 571-8501 (JP)
(72) Inventor: KOMAKI, Norio, Matsushita El. Ind. Co., Ltd., IPROC, Chuo-ku, Osaka-shi, Osaka 540-6207 (JP); SEGAWA, Takayuki, Matsushita El. Ind. Co., Ltd., IPROC, Chuo-ku, Osaka-shi, Osaka 540-6207 (JP); OOTSUKA, Yoshitaka, Matsushita El. Ind. Co., Ltd., IPROC, Chuo-ku, Osaka-shi, Osaka 540-6207 (JP); TANAKA, Satoru, Matsushita El. Ind. Co., Ltd., IPROC, Chuo-ku, Osaka-shi, Osaka 540-6207 (JP)
(74) Representative: Pautex Schneider, Nicole Véronique
(86) International application number: PCT/JP2006/321022
(87) International publication number: WO 2007/052487

(57) **Abstract**

A display apparatus operable to flexibly perform display control to a plurality of images is provided, when the plurality of images are displayed on the display apparatus, and each image is selected either as a touch operation target or as a remote control target alternatively. The display apparatus comprises: a first display device 12 and a second display device 13 operable to display a first image and a second image simultaneously; a CPU 51 operable to decide either the first image or the second image to be displayed as a remote control target and the other one as a touch operation target; a remote controller 32 operable to accept a control operation input regarding an image to be a remote control target between the first image and the second image; a first touch panel 12a and a second touch panel 13a operable to accept a touch operation input regarding an image to be a touch operation target between the first image and the second image; and a first LED 14 and a second LED 15 operable to indicate that the first image and the second image are either a remote control target or a touch operation target.

## Description

### [Technical Field]

The present invention relates to a display apparatus operable to display a first image and a second image, and a navigation device including the display apparatus. Especially, the present invention relates to a technology of operating a plurality of display apparatuses or a dual view display (a display device operable to simultaneously display two different images according to viewing angles) by a remote controller or a touch panel alternatively.

### [Background Art]

Document 1 (Published Japanese patent application 2001-280979) discloses providing two display devices as the display apparatus of the navigation device installed in a car, enlarging a display area, and displaying different images on each of the display devices, respectively.

Moreover, a dual view display, which is a single display device and operable to display different images for a driver and a fellow passenger sitting in the front passenger seat (he/she is called as a fellow passenger hereinafter), has been developed. Due to this, it is possible to display two different images on the right side and the left side simultaneously. For example, the map screen of navigation indicating a current position of the car is displayed for the driver, which is necessary for driving. In addition, a content such as a movie is displayed for the fellow passenger.

Regarding each image displayed on these display devices, for example, operation for searching a current position and setting is necessary in the navigational screen, and operation of play, forward, and stop is necessary in the screen of the content such as a movie.

Document 2 (Published Japanese patent application 2005-071286) discloses a technology of performing the operation of each image displayed on the display device by a touch panel on the display device.

When the technology is used, it is necessary to judge which the touch panel operation is for, the image provided for the driver or the image provided for the fellow passenger. Therefore, in Document 2, a touch area for the driver and a touch area for the fellow passenger are separately provided on the screen. In order to prevent from an operation error, the driver and the fellow passenger must touch his/her own touch area so as to indicate from which the operation is instructed to the display device.

Document 3 (Published Japanese patent application 2005-073076) discloses a technology of performing operation using a remote controller instead of a touch panel. In Document 3, a sensor for detecting the position of the remote controller is provided in order to judge which screen the operation is for, when the operation is performed by the remote controller. The sensor for detecting the position of the remote controller detects a position of the remote controller based on the incoming direction of response signals from the remote controller, judges the remote controller is located either at the driver or the fellow passenger, and then detects the operation of the remote controller.

However, in the display apparatus of Document 2, since the driver or the fellow passenger must reach his/her hand to the specified touch area, and then instruct which of them the input comes from beforehand, the operation is troublesome. Of course, for a driver, less input operation is more preferable when considering traffic safety.

Moreover, in the display apparatus described in Document 3, although the display apparatus does not need to be informed of the operator is either the driver or the fellow passenger, the sensor for detecting the position of the remote controller needs to be additionally provided in order that the display apparatus itself can recognize it. Thus, the construction must be complicated.
[Document 1] Published Japanese patent application 2001-280979
[Document 2] Published Japanese patent application 2005-071286
[Document 3] Published Japanese patent application 2005-073076

### [Disclosure of Invention]

### [Problem(s) to be Solved by Invention]

An object of the present invention is to provide a display apparatus operable to flexibly perform display control of a plurality of images. In the display apparatus, a plurality of images are displayed on the display apparatus. When each image is selected alternatively as either a touch operation target or a remote control target, the display apparatus can perform the display control without increasing necessary operation and providing such as a sensor for detecting the position of the remote controller.

### [Means for Solving Problem(s)]

A first aspect of the present invention provides a display apparatus comprising: a display unit operable to display a first image and a second image concurrently; a display control unit operable to determine one of the first and second images displayed by the display unit as a remote control target and the other of the first and second images displayed by the display unit as a touch operation target; a remote control information inputting unit operable to accept remote control input concerning the one of the first and second images determined as the remote control target; a touch control information inputting unit operable to accept touch operation input concerning the other of the first and second images determined as the touch operation target; and a specification unit operable to specify that at least one of the first and second images has been determined as either the remote control target or the touch control target.

With this structure, one of the first and second images is handled by the remote control information inputting unit, and the other of the first and second images is handled by the remote control information inputting unit.

In addition, since the specification unit specifies that at least one of the first and second images has been determined as either the remote control target or the touch control target, it is enough for an operator to use an inputting unit suitable for a target of a corresponding image. The operator need not input detail information indicating which of the inputting unit is used. That is, the operator can handle the images flexibly. Neither increasing required operation nor providing a sensor or the like for detecting a position of the remote control information inputting unit is needed.

A second aspect of the present invention provides a display apparatus as defined in the first aspect of the present invention, wherein the display unit comprises a pair of a first display device operable to display the first image and a second display device operable to display the second image.

With this structure, the first display device displays the first image and the second display device displays the second image, respectively and independently. The images displayed by the display devices do not interfere with each other. In addition, the devices can display the images fully utilizing the resolution thereof.

A third aspect of the present invention provides a display apparatus as defined in the second aspect of the present invention, wherein the touch control information inputting unit comprises a pair of a first touch panel operable to detect a touch position on the first display device and a second touch panel operable to detect a touch position on the second display device.

With this structure, the first and second touch panels can be composed separately, and touch positions on the first and second display devices can be handled in a distinguishable manner.

A fourth aspect of the present invention provides a display apparatus as defined in the second aspect of the present invention, wherein the specification unit comprises a light-emitting element provided relating to at least one of the first and second display devices, and wherein the specification unit switches the light-emitting element ON or OFF to specify that at least one of the first image displayed by the first display device and the second image displayed by the second display device has been determined as either the remote control target or the touch control target.

With this structure, according to ON/OFF of the light-emitting element, the operator can easily understand that at least one of the first image displayed by the first display device and the second image displayed by the second display device has been determined as either the remote control target or the touch control target.

A fifth aspect of the present invention provides a display apparatus as defined in the second aspect of the present invention, wherein the specification unit comprises a light-emitting element provided relating to at least one of the first and second display devices, and wherein the specification unit determines a luminescent color of the light-emitting element to specify that at least one of the first image displayed by the first display device and the second image displayed by the second display device has been determined as either the remote control target or the touch control target.

With this structure, according to the luminescent color of the light-emitting element, the operator can easily understand that at least one of the first image displayed by the first display device and the second image displayed by the second display device has been determined as either the remote control target or the touch control target.

A sixth aspect of the present invention provides a display apparatus as defined in the fourth aspect of the present invention, wherein the light-emitting element of the specification unit is provided relating to the first and second display devices, respectively.

With this structure, whichever of the first and second display devices the operator is looking at, the operator can easily understand that a display device seen by the operator is either the remote control target or the touch control target.

A seventh aspect of the present invention provides a display apparatus as defined in the second aspect of the present invention, wherein the specification unit adds an additional image specifying that at least one of the first image displayed by the first display device and the second image displayed by the second display device has been determined as either the remote control target or the touch control target to at least one of the first image displayed by the first display device and the second image displayed by the second display device.

With this structure, according to the additional image, the operator can easily understand that at least one of the first image displayed by the first display device and the second image displayed by the second display device has been determined as either the remote control target or the touch control target. In this case, providing a specification unit in the exterior of the display devices is not needed, thereby constituting the display device more compactly.

An eighth aspect of the present invention provides a display apparatus as defined in the seventh aspect of the present invention, wherein at least one of the first image displayed by the first display device and the second image displayed by the second display device is overlaid with the additional image by the specification unit.

With this structure, according to the additional image overlapped with at least one of the first and second images, the operator can easily understand that at least one of the first image displayed by the first display device and the second image displayed by the second display device has been determined as either the remote control target or the touch control target. In this case, providing a specification unit in the exterior of the display devices is not needed, thereby constituting the display device more compactly.

A ninth aspect of the present invention provides a display apparatus as defined in the first aspect of the present invention, wherein the remote control information inputting unit is a remote controller.

With this structure, the operator can easily input remote control information by the remote controller.

A tenth aspect of the present invention provides a display apparatus as defined in the ninth aspect of the present invention, wherein the remote controller comprises a grip hand sensor operable to detect with which of a right hand or a left hand does an operator grip the remote controller to generate a detection result.

The grip hand sensor of this structure enables to detect the grip hand of the operator.

An eleventh aspect of the present invention provides a display apparatus as defined in the tenth aspect of the present invention, wherein, based on the detection result generated by the grip hand sensor, the display control unit judges which of a driver or a fellow passenger does grip the remote controller to decide one of the driver and the fellow passenger as a person judged to grip the remote controller and the other of the driver and the fellow passenger as a person judged not to grip the remote controller, and wherein the display control unit determines one, which arranged looking toward the person judged to grip the remote controller, of the first and second display devices as the remote control target and the other, which arranged looking toward the person judged not to grip the remote controller, of the first and second display devices as the touch operation target.

With this structure, since the display control unit performs judgment as the above, even when the driver and/or the fellow passenger input/inputs nothing, the remote control target and/or the touch operation target are/is properly selected, thereby performing rational display control.

A twelfth aspect of the present invention provides a display apparatus as defined in the first aspect of the present invention, further comprising: a mounting plate to be fixed on a dashboard of a car; and a column provided upward from the mounting plate, wherein the first and second display devices are supported looking toward the driver and the fellow passenger, respectively, in a manner such that an angle between a surface of the first display device and a surface of the second display device can be changed about the column.

With this structure, the driver and/or the fellow passenger adjust/adjusts the angle, thereby displaying the images clearly.

A thirteenth aspect of the present invention provides a display apparatus as defined in the twelfth aspect of the present invention, wherein the angle is set from 180 degree to 360 degree.

With this structure, the driver can see a corresponding image rotating his/her neck at a slight angle, and can immediately return his/her eyes to the direction of travel of the car. This is preferable considering traffic safety.

The distances from the driver and/or the fellow passenger to the first and second display devices are short, and hands of the driver and/or the fellow passenger do not interfere each other, and can input operation information.

A fourteenth aspect of the present invention provides a display apparatus as defined in the first aspect of the present invention, further comprising: an angular velocity sensor operable to detect the angle, wherein the display control unit, based on the angle detected by the angle sensor, determines toward which of the driver or the fellow passenger do the first and second display devices look.

With this structure, even when the driver and/or the fellow passenger instruct/instructs nothing, the remote control target and the touch operation target can be changed automatically and adaptively.

A fifteenth aspect of the present invention provides a display apparatus as defined in the first aspect of the present invention, wherein only one of the first and second images can be seen from the display unit according to an angle toward which the display unit is seen.

With this structure, the display apparatus is composed of only one display device, the first and second images, however, can be displayed thereon. This structure is preferably used for a compact car with a poor mounting space.

### [Effect of Invention]

According to the present invention, one of the first and second images is handled by the remote control information inputting unit and the other of the first and second image is handled by the touch operation information inputting unit, and the specification unit indicating targets of the images is provided. Thus, the operator can handle the images flexibly. Neither increasing required operation nor providing a sensor or the like for detecting a position of the remote control information inputting unit is needed.

### [Brief Description of Drawings]

[Fig. 1]

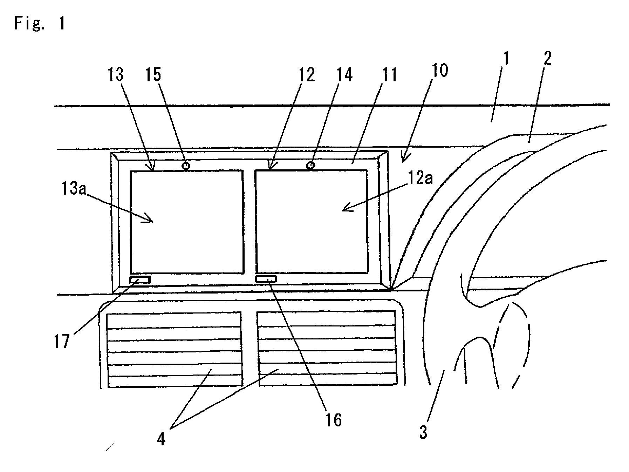

   Fig. 1 illustrates a view showing an area near a dashboard of a car with which a display apparatus in Embodiment of the present invention is equipped.
[Fig. 2]

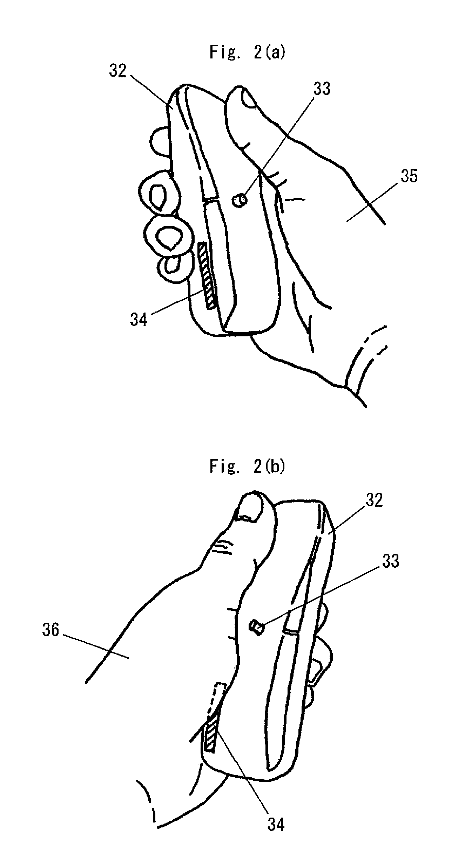

   Fig. 2(a) illustrates a perspective view of a remote controller in Embodiment 1 of the present invention.
   Fig. 2(b) illustrates a perspective view of the remote controller in Embodiment 1 of the present invention.
[Fig. 3]

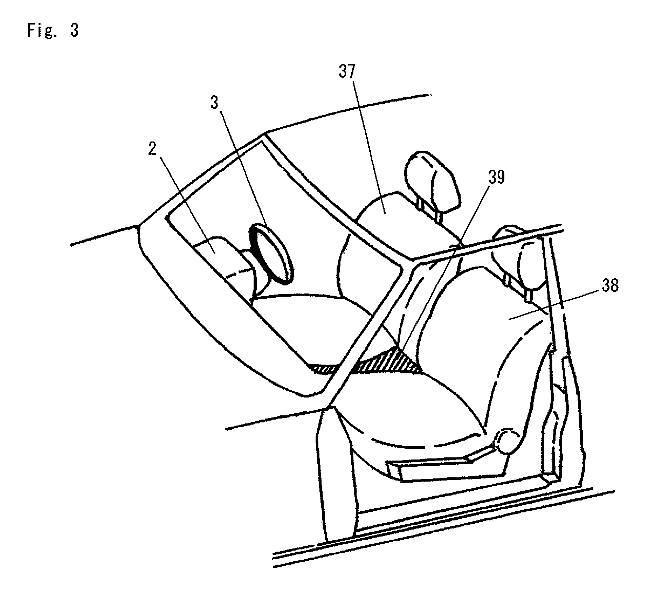

   Fig. 3 illustrates a perspective view of a center console unit in Embodiment 1 of the present invention.
[Fig. 4]

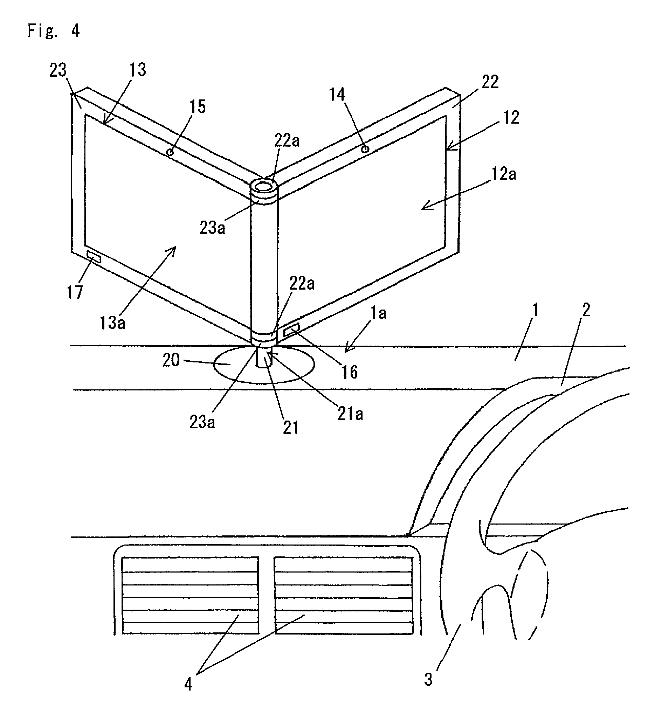

   Fig. 4 illustrates a view showing an area near a dashboard of a car with which a display apparatus in Embodiment 2 of the present invention is equipped.
[Fig. 5]

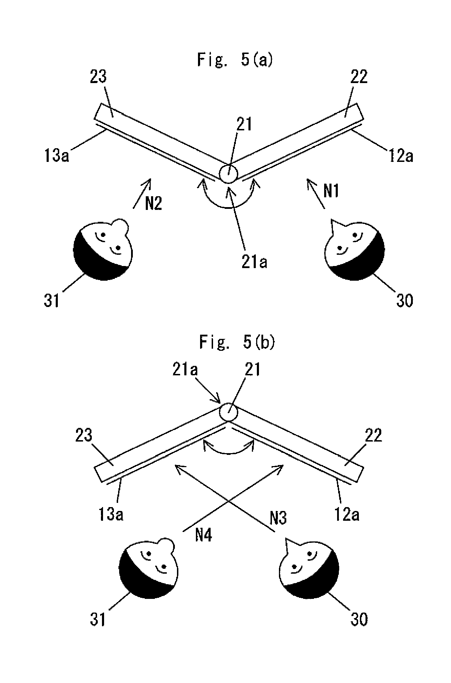

   Fig. 5(a) illustrates a plane view showing a position relationship in Embodiment 2 of the present invention.
   Fig. 5(b) illustrates a plane view showing a position relationship in Embodiment 2 of the present invention.
[Fig. 6]

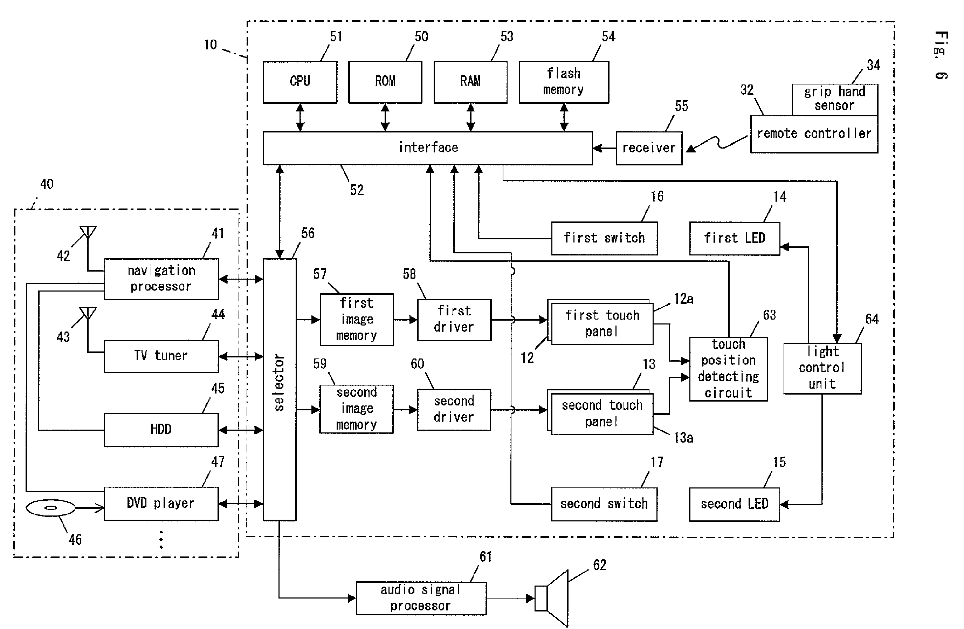

   Fig. 6 is a block diagram of a car navigation device in Embodiments 1 and 2 of the present invention.
[Fig.7]

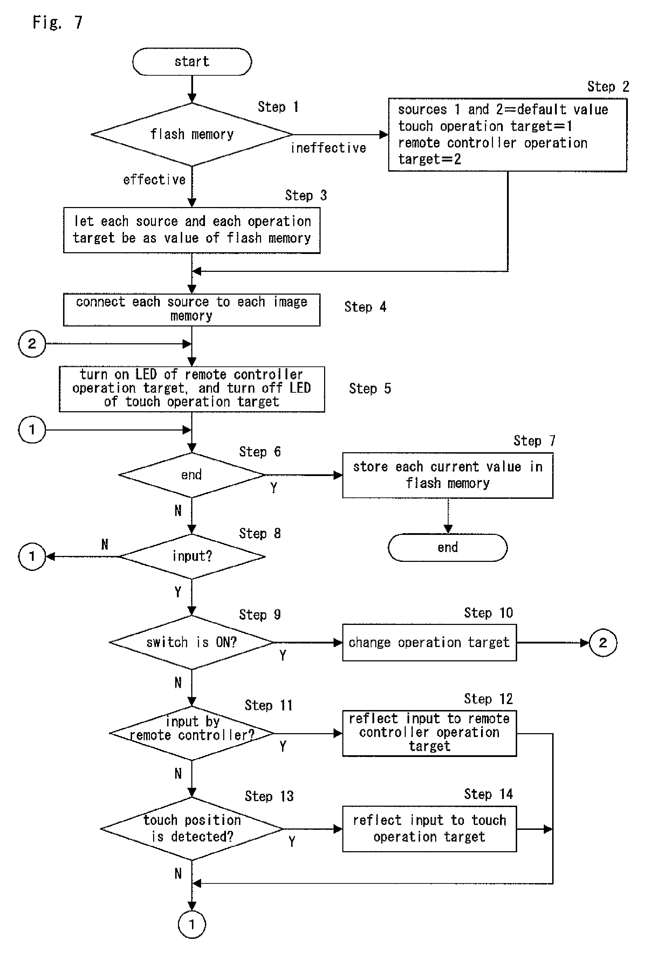

   Fig. 7 is a flow chart of the car navigation device in the Embodiments 1 and 2 of the present invention.
[Fig. 8]

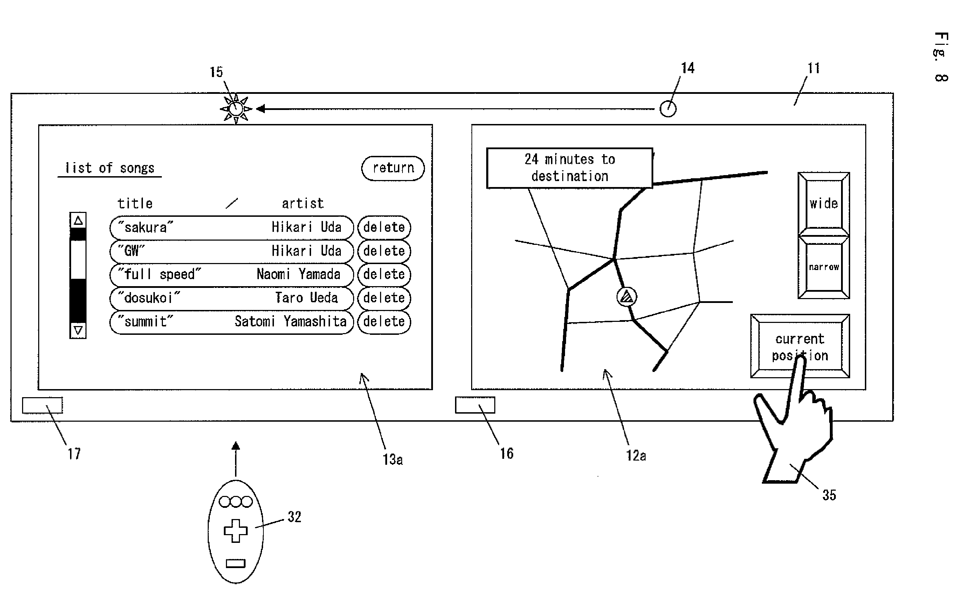

   Fig. 8 illustrates a display example in Embodiments 1 and 2 of the present invention.
[Fig. 9]

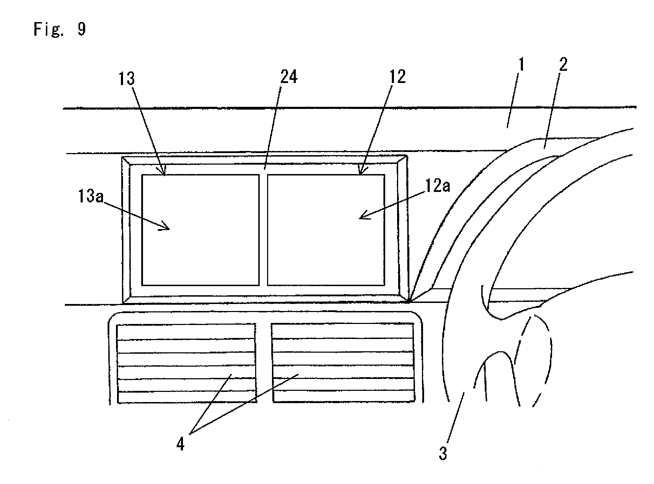

   Fig. 9 illustrates a view showing an area near a dashboard of a car with which a display apparatus in Embodiment 3 of the present invention is equipped.
[Fig. 10]

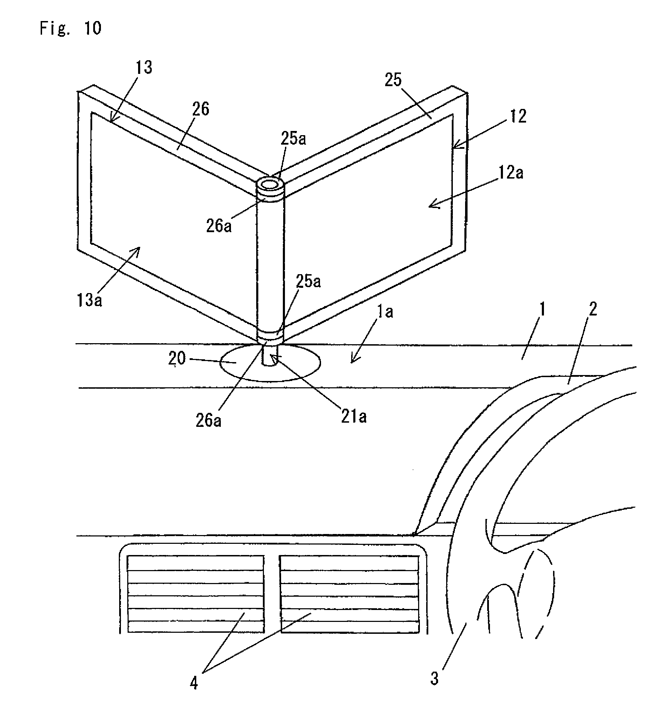

   Fig. 10 illustrates a view showing an area near a dashboard of a car with which a display apparatus in Embodiment 4 of the present invention is equipped.
[Fig. 11]

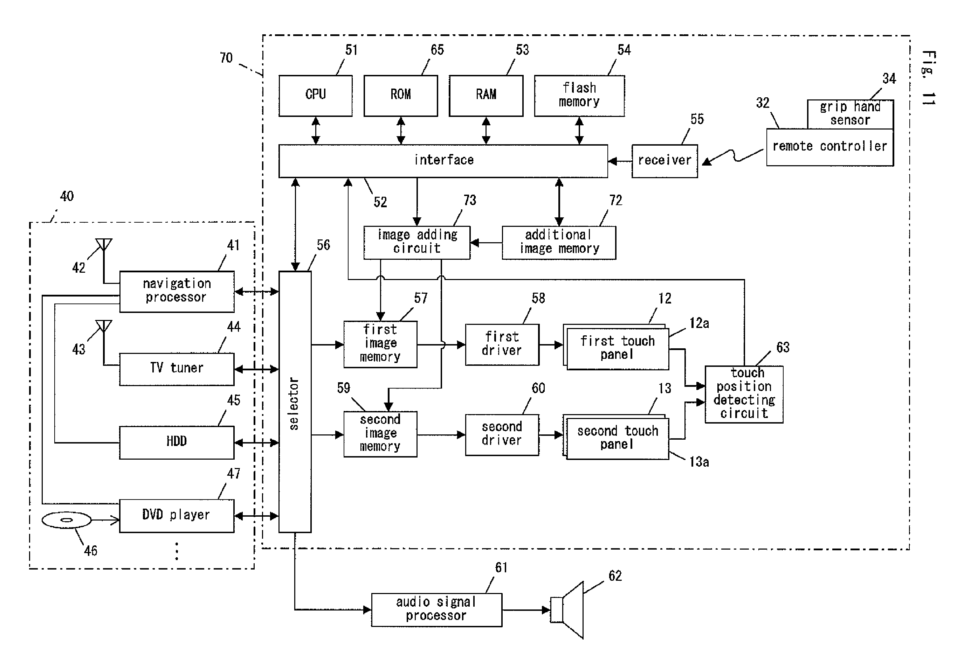

   Fig. 11 is a block diagram of a car navigation device in Embodiments 3 and 4 of the present invention.
[Fig. 12]

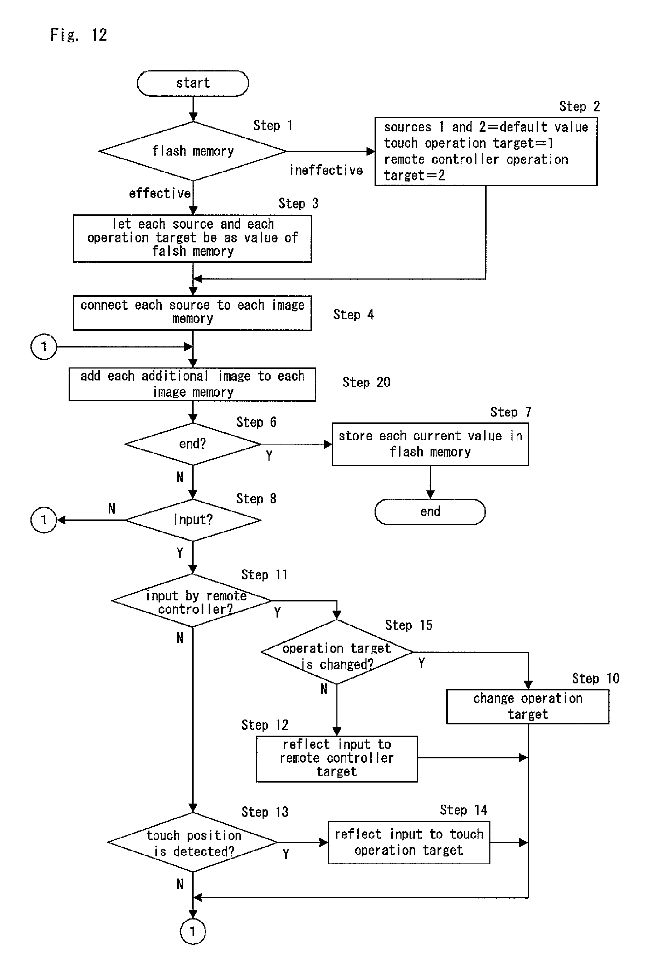

   Fig. 12 is a flow chart of the car navigation device in Embodiments 3 and 4 of the present invention.
[Fig. 13]

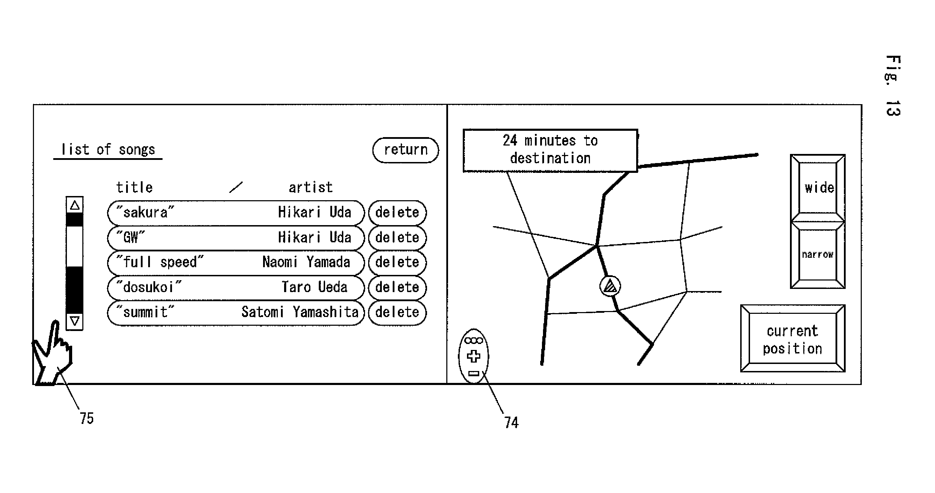

   Fig. 13 illustrates a display example in Embodiments 3 and 4 of the present invention.
[Fig. 14]

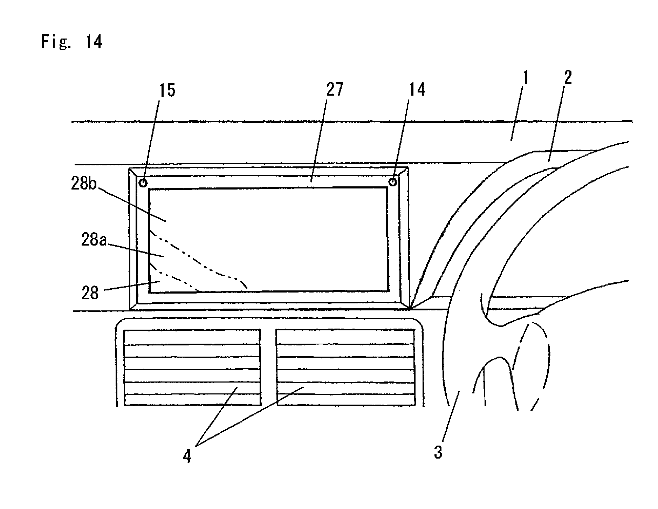

   Fig. 14 illustrates a view showing an area near a dashboard of a car with which a display apparatus in Embodiment 5 of the present invention is equipped.
[Fig. 15]

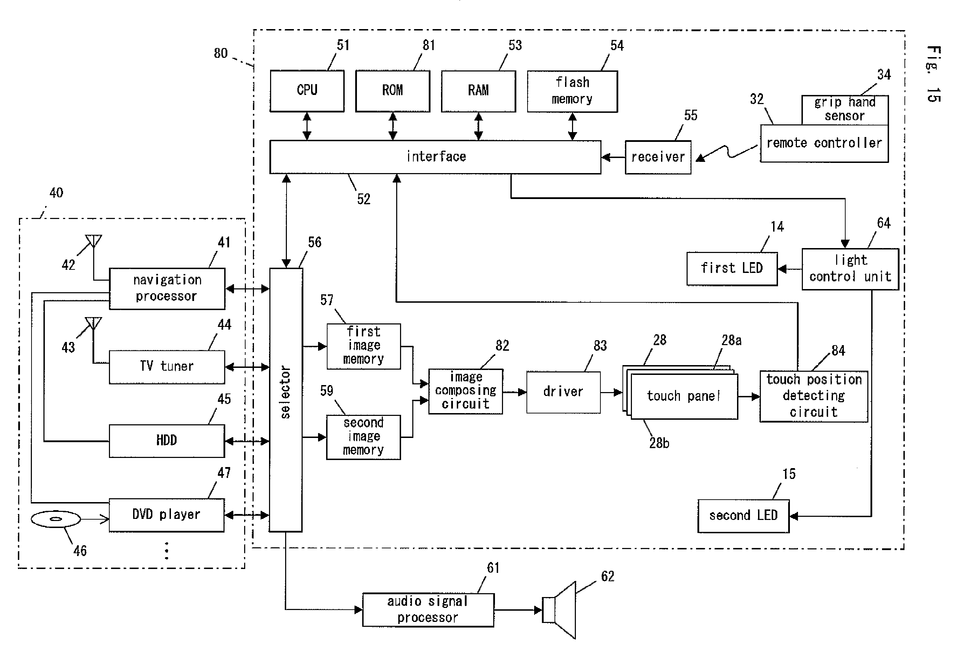

   Fig. 15 is a block diagram of the car navigation device in Embodiment 5 of the present invention.
[Fig. 16]

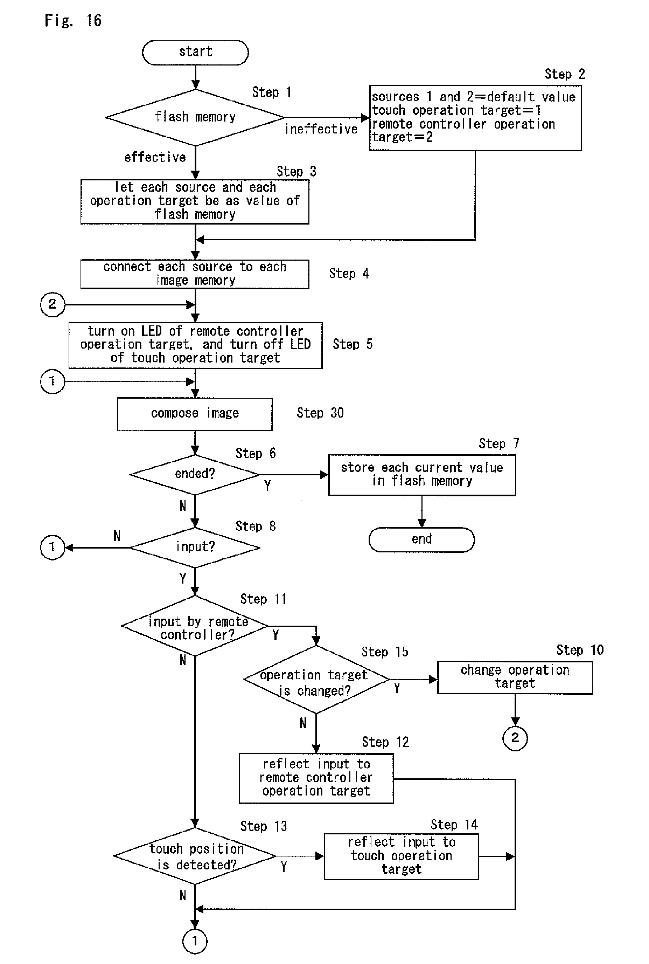

   Fig. 16 is a flow chart of the car navigation device in Embodiment 5 of the present invention.
[Fig. 17]

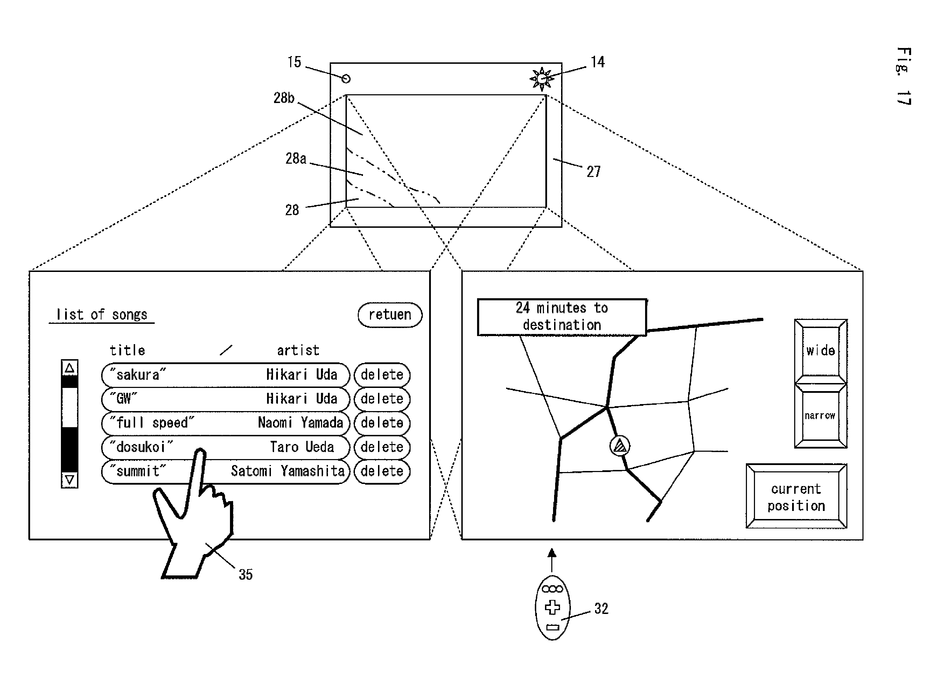

   Fig. 17 illustrates a display example in Embodiment 5 of the present invention.
[Fig. 18]

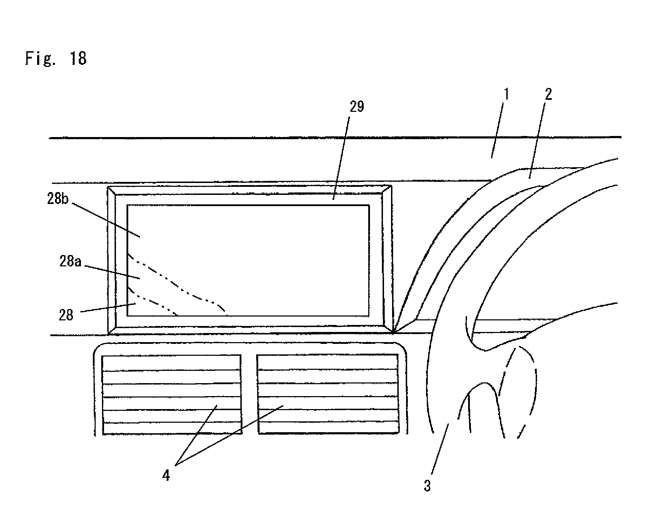

   Fig. 18 illustrates a view showing an area near a dashboard of a car with which a display apparatus in Embodiment 6 of the present invention is equipped.
[Fig. 19]

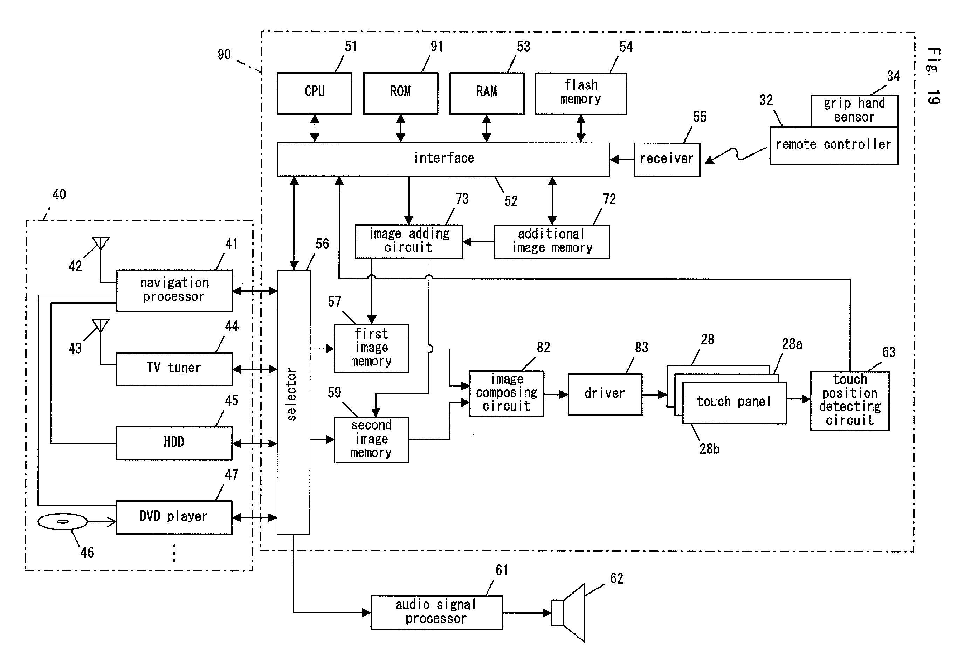

   Fig. 19 is a block diagram of a car navigation device in Embodiment 6 of the present invention.
[Fig. 20]

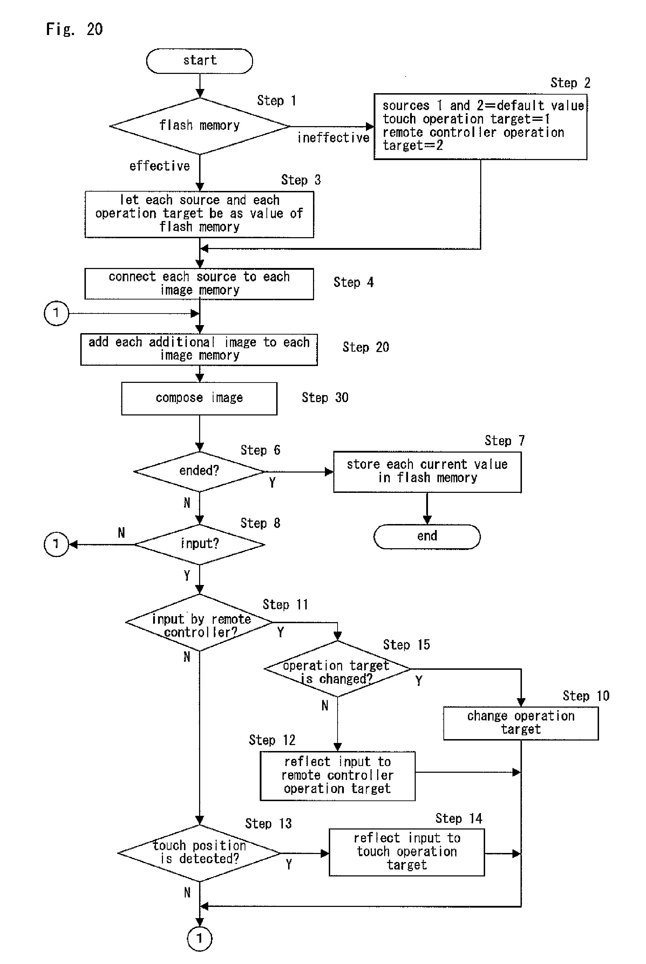

   Fig. 20 is a flow chart of the car navigation device in Embodiment 6 of the present invention.

### [Description of symbols]

1: dashboard
1a: central portion of a top panel
2: center console
3: steering wheel
4: air conditioner outlet
10, 70, 80, and 90: display apparatus
11, 24, 27, and 29: frame
12: first display device
12a: first touch panel
13: second display device
13a: second touch panel
14: first LED
15: second LED
16: first switch
17: second switch
20: mounting plate
21: column
21a: angular velocity sensor
22 and 25: first frame
22a, 23a, 25a, and 26a: boss portion
23 and 26: second frame
28: display device
28a: parallax barrier
28b: touch panel
30: driver
31: fellow passenger
32: remote controller
33: operation button
34: grip hand sensor
35: right hand
36: left hand
37: driver seat
38: passenger seat
39: center console unit
40: source supplying unit
41: navigation processor
42: GPS antenna
43: TV antenna
44: TV tuner
45: hard disk drive
46: DVD
47: DVD player
50, 65, 81, and 91: ROM
51: CPU
52: interface
53: RAM
54: flash memory
55: receiver
56: selector
57: first image memory
58: first driver
59: second image memory
60: second driver
61: audio signal processor
62: speaker
63 and 84: touch position detecting circuit
64: light control unit
72: additional image memory
74 and 75: additional image
82: image composing circuit
83: driver

### [Best Mode of Carrying Out the Invention]

The embodiments of the present invention will now be explained referring to the accompanying drawings in the following.

### (Embodiment 1)

Fig. 1 illustrates a view showing an area near a dashboard of a car with which a display apparatus in Embodiment 1 of the present invention is equipped. The display apparatus of the present embodiment is preferably used as a display of a car navigation device, and has been built in a car before the car is delivered to a user.

As shown in Fig. 1, a center console 2 including an instrument panel is arranged in a dashboard 1 located in front of the driver's seat. A steering wheel 3 is provided in the side of the driver's seat of the center console 2. Furthermore, an air conditioner outlet 4, which sends fresh, cold, or warm air to the driver and the fellow passenger, is arranged in the center of the dashboard 1.

A display apparatus 10 of the present embodiment is preferably built in the dashboard 1 at a portion, where the driver's field of view is not interrupted, above the air conditioner outlet 4. A frame 11 is fixed on the dashboard 1, thereby the display apparatus 10 is supported by the dashboard 1. The display apparatus 10 can be divided into a driver's side portion and a fellow passenger's side portion. A first display device 12 at the driver's side and a second display device 13 at the fellow passenger's side are firmly fixed to the corresponding positions of the frame 11, respectively. In an example of Fig. 1, since a car is a car with right-hand steering wheel, toward the advance direction of the car, the right-hand side is the driver's seat and the left-hand side is the fellow passenger's seat. In addition, the present invention can be applied to a car with left-hand steering wheel by inverting the position relationship between the right and left. Therefore, a case when the car is a car with left-hand steering wheel is included in the present invention, unless it deviates from the scope of the present invention.

In Fig. 1, the first display device 12 and the second display device 13 correspond to a display unit. As a touch operation information input unit, a first touch panel 12a and a second touch panel 13a are superimposed on each of surfaces of the first and second display devices 12 and 13, respectively. In other words, when the driver or the fellow passenger touches the first touch panel 12a or the second touch panel 13a with a hand (usually a fingertip), the first touch panel 12a or the second touch panel 13a detects a touch position. It is desirable for the first touch panel 12a and the second touch panel 13a to be made from a transparent or translucent material in order to finely see the display contents of the first display device 12 and the second display device 13 that are located in the back of the first touch panel 12a and the second touch panel 13a. It is enough for the first touch panel 12a and the second touch panel 13 a to detect an XY coordinates value of a touch position in sufficient accuracy. Thus, the detection method is arbitrary. For example, an electromagnetic method, an electric resistance method, an electrostatic capacitance method, a pressure-sensitive method, and so on is suitable.

When there is enough space for the installation in a car, each of the first and second display devices 12 and 13 may be a small cathode-ray tube or a rear projector, etc. However, it is desirable that each of these devices 12 and 13 is a thin display panel in general. For example, a liquid crystal display, an organic electroluminescence display, a plasma display, an SED (Surface-conduction Electron-emitter Display), etc. are suitable. When considering display performance, it is desirable that the first display device 12 and the second display device 13 are color display devices. However, the devices may be monochrome display devices, theoretically. This case is also included in the present invention.

One of the first display device 12 and the second display device 13 is a remote controller operation target (a device which operation input by a remote controller is valid), and the other one is a touch panel operation target (a device which operation input by a touch panel is valid). The display content of the first display device generally differs from the display content of the second display device. For example, navigation information is displayed on the first display device at the driver's side, and AV (audio/visual) information is displayed on the second display device at the fellow passenger's side. In addition, although there is little profit, it is possible to display the same display content on the first display device 12 and the second display device 13.

As shown in Fig.1, a first LED 14, a second LED 15, a first switch 16, and a second switch 17 are placed in each of the surrounding of the first display device 12 and the second display device 13, respectively (the position relationship is corresponded to each other). In the present embodiment, the first LED 14 and the second LED 15 indicate which of the first display device 12 and the second display device 13 is the remote controller operation target. More specifically, the LED, which is close to the display device targeted for the remote controller operation, is turned on. Moreover, the LED, which is close to the display device targeted for the touch panel operation, is turned off. For example, when the first display device 12 is the remote controller operation target, the first LED 14 is turned on, and the second LED 15 is turned off. On the contrary, when the second display device 13 is the remote controller operation target, the second LED 15 is turned on, and the first LED 14 is turned off.

However, this is only an example. Thus, the above-mentioned ON/OFF status may be reversed. In addition, when the first LED 14 and the second LED 15 can emit more than two colors (for example, red and blue), the LED, which is close to the display device targeted for the remote controller operation, may emit a specified color (for example, red), and the other LED may emit another color (for example, blue). The first LED 14 and the second LED 15 correspond to a specification unit, the specification unit, however, does not have to be an LED. For example, the specification unit may be a small electric bulb, a fluorescent display tube, and so on. The specification unit may be composed of small parts (for example, a button, a knob, a notch, etc.) which change the position (for example, protruding/being pulled in, rotating, inclining, etc.) by being driven by an actuator, for example, a solenoid or a motor.

In short, it is enough when the driver and the fellow passenger can see and know which of the first display device 12 and the second display device 13 is the remote controller operation target (in other words, which of the devices is the touch panel operation target).

In the present embodiment, the first switch 16 and the second switch 17 correspond to a switching unit. When either the switch 16 or the switch 17 is pushed, the display device, which is close to the pushed switch, becomes the remote controller operation target. When the remote controller operation target is changed, the touch panel operation target is changed. In addition, the ON/OFF status of the first LED 14 and the second LED 15 is changed, as described bellow.

However, the switching unit, which changes the remote controller operation target and the touch panel operation target, does not have to be the first switch 16 and the second switch 17. For example, one mode (for example, depression of a button for switching) may be allotted to switching an operation target. Even in a case where it is not performed by the remote controller, more than two switches do not need to be provided. In other words, one switch is provided, and then the operation target is toggled every time the switch is pushed. Furthermore, the specific switch may be omitted and a touch panel, which is overlapped with a display device targeted for the remote controller operation, is used instead of the switch. Under this condition, the operation target may be changed when the touch panel detects a touch.

Next, referring to Fig. 2 and Fig. 3, a remote controller as a remote control information inputting unit in Embodiment 1 will now be explained.

As shown in Fig. 2 (a), an operation button 33 is provided at an operation side (an upper surface) of a remote controller 32. Thus, an operator gripping the remote controller 32 can input a desired operation instruction to the display apparatus 10. An input signal is outputted from the remote controller 32 via such as infrared rays and radio waves. Furthermore, a grip hand sensor 34 is arranged at one side (on the left side in the present embodiment) of the remote controller 32. The grip hand sensor 34 detects whether the operator grips the operation button 33 with a right hand 35 as shown in Fig. 2(a), or with a left hand 36 as shown in Fig. 2(b). The grip hand sensor 34 is composed of a switch, a piezoelectric element, and so on preferably.

As shown in Fig. 2(a), when the operator grips the operation button 33 with the right hand 35, since the left hand 36 does not touch the grip hand sensor 34, the grip hand sensor 34 outputs a signal indicating an untouched state (or the grip hand sensor 34 may not output any signals). On the other hand, as shown in Fig. 2(b), when the operator grips the operation button 33 with the left hand 36, since the right hand 35 touches the grip hand sensor 34, the hand sensor 34 outputs a signal indicating a touched state. Thereby, the grip hand sensor 34 can detect by which hands of the right hand 35 and the left hand 36 that the operator uses (in other words, a gripping hand). As shown in Fig. 2, the grip hand sensor 34 may be provided on only one side of the remote controller 32 or on both sides of the remote controller 32. In other words, the present invention includes a case that the grip hand sensors 34 are provided on both sides of the remote controller 32.

As shown in Fig. 3, the remote controller 32 is usually placed near a center console unit 39, which is provided between a driver's seat 37 and a passenger's seat 38. As shown in Fig. 3, when a car is a car with right-hand steering, and the remote controller 32 exists near the center console unit 39, a driver 30, who sits on the driver's seat 37, often grips the remote controller 32 with the left hand 36 because it is closer to the center console unit 39 than the right hand 35. Moreover, the fellow passenger 31, who sits on the passenger's seat 38, often grips the remote controller 32 with the right hand 35 because it is closer to the passenger's seat 38.

Therefore, in a case of the car with right-hand steering, as shown in Fig. 2 (b), when the grip hand sensor 34 detects that the gripping hand is the left hand 36, it can be judged that the operator is the driver 30 with high probability. On the contrary, in a case of the car with right-hand steering wheel, as shown in Fig. 2 (a), when the grip hand sensor 34 detects that the gripping hand is the right hand 35, it can be judged that the operator is the fellow passenger 31 with high probability.

As explained above, the remote controller 32 of the present embodiment not only detects the gripping hand of the operator, but also can judge which of the driver 30 and the fellow passenger 31 is in operation. When the judgment result is applied to the control of the display apparatus 10 that has two screens of the first display device 12 for the driver 30 and the second display device 13 for the fellow passenger 31 as mentioned above, it is possible to realize much more flexible and rational operation environment. As for a car with left-hand steering wheel, the above-mentioned contents can be dealt with by replacing right and left.

In addition, the details of Embodiment 1 will be later mentioned with the details of Embodiment 2.

### (Embodiment 2)

Fig. 4 illustrates a view showing an area near a dashboard of a car with which a display apparatus in Embodiment 2 of the present invention is equipped. The display apparatus of the present embodiment is preferably used as a display of a car navigation device, and belongs to a type in which the device is installed after delivery of the car. In Fig. 4, the same symbols are given to elements each having the same function as elements of Fig. 1 in order to omit explanation.

As shown in Fig. 4, the display apparatus of the present embodiment has the different configuration of and so on the frame from Embodiment 1. In the present embodiment, the display apparatus is installed in the car by fixing a mounting plate 20, which is provided at the bottom, to a central portion of a top panel 1a of the dashboard 1. A cylindrical column 21 is provided in the vertically upward direction from the central portion of the mounting plate 20.

Boss portions 22a and 23a are formed in a first frame 22 supporting the first display device 12 and a second frame 23 supporting the second display device 13, respectively. The boss portions 22a and 23a are pivoted by the upper end and the lower part of the column 21, respectively. Thereby, the first display device 12 and the second display device 13 can rotate around on the column 21 in a horizontal plane. The rotation changes angles formed by each surface of the first display device 12 and the second display device 13.

As shown in Fig. 5, with the adjustment of the angle, it is preferable that the first display device 12 is turned to the driver 30, and the second display device 13 is turned to the fellow passenger 31. Thus, the driver 30 can see the display contents of the first display device 12 when the driver 30 faces to a direction of an arrow N1, and can touch the first touch panel 12a, which is on the first display device 12, by his/her hand. Moreover, the fellow passenger 31 can see the display contents of the second display device 13 when the fellow passenger 31 faces to a direction of an arrow N2, and can touch the second touch panel 13a, which is on the first display device 13, by his/her hand. In the position relationship of Fig. 5(a), since the driver 30 can see the display contents of the first display device 12 with a small move of his/her head, and can look forward of the car immediately after seeing the display content, this is preferable when considering the traffic safety. Moreover, since the distance from the driver 30 to the first touch panel 12a and the distance from the fellow passenger 31 to the second touch panel 13a are short, hands of the driver 30 and the fellow passenger 31 do not interfere with each other when they touch the first touch panel 12a and the second touch panel 13a. Thus, this is also preferable when considering the operability.

On the other hand, as shown in Fig. 5 (b), it is possible to change the angle formed by the first display device 12 and the second display device 13 for the fellow passenger 31 to see the first display device 12 and touch the first touch panel 12a (the direction of an arrow N4), and for the driver 30 to see the second display device 14 and touch the second touch panel 13a (the direction of an arrow N3). However, with this way, since the distance from the fellow passenger 31 to the first touch panel 12a and the distance from the driver 30 to the second touch panel 13a are longer than these of Fig. 5(a), the operability falls. Moreover, the driver 30 and the fellow passenger 31 may simultaneously intend to touch the second touch panel 13 a and the first touch panel 12a, respectively. In such a situation, hands of the driver 30 and the fellow passenger 31 may interfere with each other, and this is not preferable. In the position relationship of Fig. 5(b), since the driver 30 needs to move the head with the wide range comparing to that of Fig. 5(a) in order to look forward of the car after seeing the display contents, this is not preferable when considering the traffic safety.

In the situation of Fig. 5(b), since the second display device 13 and second touch panel 13a are targeted for the use of the driver 30, and the first display device 12 and first touch panel 12a are targeted for the use of the fellow passenger 31, it is necessary to change the targets because the targets are different in the case of Fig. 5(a) or Embodiment 1. In order to cope with the situation, an angular velocity sensor 21a for detecting the angle formed by the surfaces of the first display device 12 and the second display device 13 is provided. When the angle detected by the angular velocity sensor 21a is, for example, less than 180 degrees, a CPU 51 (see, Fig. 6) automatically changes the targets.

In other words, Fig. 5(b) shows a state which the angle is greater than or equal to 0 degree and less than or equal to 180 degrees. Fig. 5(a) shows a state which the angle is greater than or equal to 180 degrees and less than or equal to 360 degrees. Thus, the CPU 51 controls how the targets should be arranged according to the angle.

### (Details of Embodiments 1 and 2)

Next, referring to Fig. 6, the details of Embodiments 1 and 2 are explained. Embodiments 1 and 2 are fundamentally the same in a block diagram level and a flow chart level. Moreover, in Fig. 6, the same symbols are given to elements each having the same function as elements of Figs. 1 to 5 in order to omit explanation.

Fig. 6 is a block diagram of a car navigation device in Embodiments 1 and 2 of the present invention. This car navigation device includes a source supplying unit 40, the display apparatus 10, and other elements.

Within the source supplying unit 40, a hard disk drive 45 stores AV reproduction information as shown in the left side of Fig. 8, and outputs the AV reproduction information according to the predetermined format (a method which can be reproduced by the display apparatus 10) to a selector 56 of the display apparatus 10.

When a DVD (Digital Versatile Disk) 46 is set, a DVD player 47 reproduces the reproduction information recorded on the DVD 46. Map information is stored in one of or both of the hard disk drive 45 and the DVD 46. Of course, a DVD recorder may be used instead of the DVD player.

A navigation processor 41 is connected to a GPS (Global Positioning System) antenna 42, and inputs a signal from an angular velocity sensor and a distance sensor (not shown) if necessary. Referring to the map information stored in the hard disk drive 45 or the DVD 46, the navigation processor 41 detects the present absolute position of the car in which the navigation device is installed, using the signal from the GPS antenna 42 (and the angular velocity sensor and the distance sensor, if necessary), generates navigation information based on the detected absolute position and the map information, and outputs the generated navigation information according to the predetermined format to the selector 56 of the display apparatus 10. Moreover, when information of a destination is inputted, the navigation processor 41 searches for one or more routes from the present absolute position to the destination, and outputs the search result information to the selector 56 of the display apparatus 10 similarly. Furthermore, according to the search result information, the route guidance information, which guides the driver to the destination, referring to the map information, is outputted to the selector 56 of the display apparatus 10 similarly.

A TV antenna 43 is connected to a TV tuner 44. The TV tuner 44 generates TV reproduction information by demodulating the broadcast waves received by the TV antenna 43. The TV tuner 44 outputs the generated TV reproduction information according to the predetermined format to the selector 56 of the display apparatus 10.

Here, it is enough for the source supplying unit 40 to supply at least two kinds of image information to the selector 56 of the display apparatus 10. The composition of Fig. 6 may be changed variously.

The display apparatus 10 includes the following elements in addition to the elements that have been already explained.

A ROM 50 stores a control program based on the flow chart of Fig. 7.

The CPU 51 controls each element of the display apparatus 10 by performing the control program which the ROM 50 stores. In other words, the CPU 51 corresponds to a display control unit. A temporary storing area for storing data that is necessary when the CPU 51 performs the execution is allocated in a RAM 53.

A flash memory 54 stores each value (values of a source 1 and 2 that are mentioned in the following, the touch panel operation target, the remote controller operation target, and so on) after the previous processing is completed. In addition, the flash memory 54 is merely an example of a non-volatile storage medium, the hard disk drive 45 may have a certain area instead of it (in other words, the flash memory 54 may be omitted).

A receiver 55 receives the input signal from the remote controller 32 (therefore, it is an infrared ray receiver when the remote controller 43 outputs infrared rays, and it is a radio wave receiver when it outputs radio waves).

An interface 52 is composed of a bus and an I/O unit which relay I/O signals from each element of the display apparatus 10.

The selector 56 inputs a selection signal from the CPU 51, selects a source 1 (a source should be displayed on the first display device 12) and a source 2 (a source should be displayed on the second display device 13) from the source supplying unit 40, outputs the image information of the source 1 to a first image memory 57, and outputs the image information of the source 2 to the second image memory 59. Moreover, although it is omissible, when there is audio data which should be reproduced, the selector 56 outputs the audio data to an audio data processing unit 61. The audio data processing unit 61 converts the audio data to an analog audio signal, and outputs the signal to a speaker 62 after amplification.

Both of the first image memory 57 and the second image memory 59 are composed of frame memories which can store the image data for a full screen of the first display device 12 or the second display device 13. When the first image memory 57 and the second image memory 59 store the image data, according to a synchronizing signal (not shown), a first driver 58 and a second driver 60 drive the first display device 12 and the second display device 13, respectively. Then, the display states of the first display device 12 and the second display device 13 are updated.

In addition, when the image signals supplied by the sources 1 and 2 of the selector 56 can be directly inputted to the first and second drivers 58 and 60, the first and second image memories 57 and 58 can be omitted.

A touch position detecting circuit 63 inputs a touch position coordinate signal from the first touch panel 12a and the second touch panel 13a, and outputs the inputted touch position coordinate signal to the CPU 51 via the interface 52.

When the light control signal is inputted from the CPU 51 via the interface 52, a light control unit 64 makes either a first LED 14 or a second LED 15 turn on, and makes the other one turn off, according to the light control signal. In addition, when another display form other than the above-mentioned form is used, the operation of the light control unit 64 should be changed suitably.

Next, referring to Fig. 7, operation of the display apparatus in Embodiments 1 and 2 is explained.

When the operation is started, the CPU 51 checks whether an effective value is stored in the flash memory 54 at Step 1. For example, in a case that the display apparatus 10 may operate for the first time, since the last operating state itself does not exist, the effective value is not stored in the flash memory 54. In such a case, at Step 2, the CPU 51 sets the source 1 and the source 2 to default values (for example, the CPU 51 makes the source 1 as the navigation processor 41, and the source 2 as the TV tuner 44), makes the touch panel operation target as a value "1" that indicates the first display device 12 on the side of the driver 30, and makes the remote controller operation target as a value "2" that indicates the second display device 13 on the side of the fellow passenger 31. These values are stored in the RAM 53.

Alternatively, at Step 1, when there is the effective value that is stored in the flash memory 54 after the previous processing is completed, the CPU 51 selects the source 1, the source 2, the touch panel operation target, and the remote controller operation target according to the value stored in the flash memory 54. These values are stored in the RAM 53. Thereby, the operation state, when the previous processing is completed, can be restored.

Next, at Step 4, the CPU 51 outputs a selection signal to the selector 56. As a result, the image data of the source 1 is outputted to the first image memory 57, and the image data of the source 2 is outputted to the second image memory 59. Moreover, the first driver 58 drives the first display device 12 based on the image data of the source 1 outputted to the first image memory 57, and the image data of the source 1 is displayed on the first display device 12. The second driver 60 drives the second display device 13 based on the image data of the source 2 outputted to the second image memory 59, and the image data of the source 2 is displayed on the second display device 13.

At Step 5, the CPU 51 outputs the light control signal to the light control unit 64. The light control signal makes one of the first LED 14 and the second LED 15, which is the remote controller operation target, turn on. At the same time, the light control signal makes the other one, which is the touch panel operation target, turn off. Thus, the result of the ON/OFF status according to the light control signal can be acquired.

For example, when the previous remote controller operation target is the first display device 12, and then the remote controller operation target is changed to the second display device 13, as shown in Fig. 8, the LED 14 is turned off, and the second LED 15 is turned on.

At Step 6, the CPU 51 checks whether the processing should be ended. When the processing should be ended, at Step 7, the CPU 51 stores each present value stored in the RAM 53 into the flash memory 54, the processing is ended thereafter.

Otherwise, the CPU 51 checks whether there is any input from an operator at Step 8. When there is no input, the CPU 51 returns the processing to Step 6.

When there is an input from the operator, at Step 9, the CPU 51 checks either the first switch 16 or the second switch 17 is pushed. At Step 10, the CPU 51 changes the operation target, which the RAM 53 stores, and moves the processing at Step 5. Otherwise, the CPU 51 moves the processing to Step 11.

At Step 11, the CPU 51 checks whether the input is from the remote controller 32. If so, referring to the RAM 53, the CPU 51 deals with the remote controller operation input signal inputted via the receiver, as an input signal, which is currently being for the remote controller operation target, between the first display device 12 and the second display device 13. Therefore, the remote controller operation input signal is reflected to the display device that is currently being the remote controller operation target (Step 12). Then, the CPU 51 moves the processing to Step 6.

When the input is not from the remote controller 32, the CPU 51 moves the processing to Step 13.

At Step 13, the CPU 51 checks the touch position coordinate signal is inputted from the touch position detecting circuit 63. If so, referring to the RAM 53, the CPU 51 deals with the touch position coordinate signal outputted from the touch position detecting circuit 63 as an input signal, which is currently being for the touch panel operation target, between the first display device 12 and the second display device 13. Therefore, the touch position coordinate signal is reflected to the display device that is currently being the touch panel operation target (Step 14). Then, the CPU 51 moves the processing to Step 6.

When the touch position coordinate signal is not inputted from the touch position detecting circuit 63, the CPU 51 immediately moves the processing to Step 6.

### (Embodiment 3)

Fig. 9 illustrates a view showing an area near a dashboard of a car with which a display apparatus in Embodiment 3 of the present invention is equipped. Similar to Embodiment 1, the display apparatus of the present embodiment is preferably used as a display of a car navigation device, and belongs to a type that the display has been built in before the delivery of the car.

In Fig. 9, the same symbols are given to elements each having the same function as Embodiments 1 and 2 in order to omit explanation.

As shown in Fig. 9, on the appearance comparing to Embodiment 1, the display apparatus of the present embodiment does not include the first LED 14, the second LED 15, the first switch 16, and the second switch 17. Because of this difference, the frame 11 of Fig. 1 is changed to a frame 24, which does not include attachment places for the first LED 14, the second LED 15, the first switch 16, and the second switch 17. Other points are the same as those of the appearance of Embodiment 1.

In addition, the details of Embodiment 3 will be later mentioned with the details of Embodiment 4.

### (Embodiment 4)

Fig. 10 illustrates a view showing an area near a dashboard of a car with which a display apparatus in Embodiment 4 of the present invention is equipped. Similar to Embodiment 2, the display apparatus of the present embodiment is preferably used as a display of a car navigation device, and belongs to a type that the display is built in after the delivery of the car.

In Fig. 10, the same symbols are given to elements each having the same function as Embodiments 1 and 2 in order to omit explanation.

As shown in Fig. 10, on the appearance comparing to Embodiment 2, the display apparatus of the present embodiment does not include the first LED 14, the second LED 15, the first switch 16, and the second switch 17. Because of this difference, the first frame 25 and the second frame 26 of Fig. 4 are changed to the first frame 25 (boss portion 25a) and the second frame 26 (boss portion 26a), which do not include attachment places for the first LED 14, the second LED 15, the first switch 16, and the second switch 17. Other points are the same as those of the appearance of Embodiment.

### (Details of Embodiments 3 and 4)

Next, referring to Fig. 11, the details of Embodiments 3 and 4 will now be explained. Embodiments 3 and 4 are fundamentally the same in a block diagram level and a flow chart level. Moreover, in Fig. 11, the same symbols are given to elements each having the same function as Fig. 6 in order to omit explanation.

Fig. 11 is a block diagram of a car navigation device in Embodiments 3 and 4 of the present invention. The following points are different comparing to Fig. 6.

A ROM 65 of a display apparatus 70 of the present embodiment stores a control program based on a flow chart of Fig. 12.

Since the first LED 14, the second LED 15, the first switch 16, and the second switch 17 are omitted, the light control unit 64 is also omitted. Especially, since the first switch 16 and the second switch 17 are omitted, the remote controller 32 changes the remote controller operation target and the touch panel operation target of the display device. For the change, a special button may be provided. Alternatively, it is possible to judge which of the driver 30 and the fellow passenger 31 grips the remote controller 32 as mentioned above. After the judgment, it is possible to confirm the display device, which is located on the side of the operator, is selected for the remote controller operation target.

In Embodiments 3 and 4, in stead of the LED ON/OFF status in Embodiments 1 and 2, in order to indicate that the display device is determined as either the remote controller operation target or the touch panel operation target, as shown in Fig. 13, an additional image 74 showing that the display device is the remote controller operation target and an additional image 75 showing that the display device is the touch panel operation target are used. In the present embodiment, although the additional images 74 and 75 are stored in an additional image memory 72, they may be stored in such as the ROM 65, the hard disk drive 45, and the flash memory 54.

Moreover, in Fig. 13, although the additional images 74 and 75 of icons are illustrated, they can be displayed in characters, for example, "remote controller" and "touch". In short, the additional image described in the present embodiment can be arbitrarily displayed as long as the operator can see the display device is determined as either the remote controller operation target or the touch panel operation target.

In Fig. 11, an image adding circuit 73 accesses the image memory 57 and the second image memory 59 according to the instruction (which corresponds to the light control signal in Embodiments 1 and 2) from the CPU 51. Then, the image adding circuit 73 respectively overwrites the first image transmitted from the source 1 to the first image memory 57 and the second image transmitted from the source 2 to the second image memory 59 with the applicable image between the additional images 74 and 75. Thereby, as shown in Fig. 13, the first image and the second image are overlapped with the additional images 74 and 75, and also are displayed. Other points are the same as those of Embodiments 1 and 2.

Next, referring to Fig. 12, operation of the display apparatus in Embodiments 3 and 4 will now be explained.

In Fig. 12, Steps 1 to 4 are the same as those of Fig. 7. However, after Step 4, the CPU 51 makes the image adding circuit 73 add the additional image 74 and the additional image 75 to either the first image memory 57 or the second image memory 59, respectively at Step 20. Thereby, the additional image 74 and the additional image 75 are overlapped, and are displayed.

In Fig. 12, Steps 6 to 8 are the same as that of Fig. 7. However, differing from Fig. 7, when there is no input at Step 8, the CPU 51 moves the processing to Step 20.

In Fig. 12, Steps 13 to 14 are the same as those of Fig. 7. However, in Embodiments 3 and 4, since the first switch 16 and the second switch 17 are omitted, there is no process which is relevant to Step 9 of Fig. 7. Instead, differing from Fig. 7, when the input is a remote controller input at Step 11, the CPU 51 checks whether the operation target change is instructed at Step 15. When it is instructed, the operation target is changed (Step 10). When it is not instructed, the remote controller input is changed to an input to the remote controller operation target (Step 12).

### (Embodiment 5)

Fig. 14 illustrates a view showing an area near a dashboard of a car with which a display apparatus in Embodiment 5 of the present invention is equipped. Similar to Embodiment 1, the display apparatus of the present embodiment is preferably used as a display of a car navigation device, and belongs to the type that the display has been built in before the delivery of the car.

However, although it is not shown in the figure, when the mounting plate 20 and the column 21 similar to Embodiment 2 are provided, it is possible to change the display as the type of the car navigation device, which is built in after the delivery of the car. This method is also included in the present invention.

In the present embodiment, dissimilar to Embodiments 1 to 4, a single display device 28 is used, and the first LED 14 and the second LED 15 are placed on the frame 27 supporting the display device 28 close to the driver 30 and the fellow passenger 31, respectively.

As shown in Fig. 14 and Fig. 17, the display device 28 of the present embodiment is a dual view display. The display shows different images according to viewing angles. The following explains the principle briefly.

A parallax barrier 28a is overlapped with the front surface of the display device 28 which is composed of a liquid crystal display panel, for example. The parallax barrier 28a is a screen possessing a plurality of perpendicular and translucent slits (not shown), which are separated by the opacity domain. Since the luminescence from the pixels, which is located at a first position group of the display device 28, is interfered with the translucent slits, only one of the driver 30 and the fellow passenger 31 can see the display. Moreover, the luminescence from the pixels, which are located at a second position group differing from the first position group, is interfered with the translucent slits, only the other of the driver 30 and the fellow passenger 31 can see the image.

Therefore, even though the display device is the single display device 28, when the image should be displayed at the first position group and the image should be displayed at the second position group differ from each other, it is possible to simultaneously display two different images according to the viewing angles.

For that reason, in the present embodiment, as shown in Fig. 15, an image composing circuit 82 is provided in the latter part of the first image memory 57 and the second image memory 59. The image composing circuit 82 composes the first image and the second image in order to display the first image stored in the first image memory 57 at the first position group, and the second image stored in the second image memory 59 at the second position group. Then, the image composing circuit 82 outputs the composed image information to a driver 83. Regarding the longitudinal direction and the orthogonal direction of the translucent slits, the composition processing can be easily performed by reducing the amount of the information for the first image and the second image to half, respectively.

The driver 83 drives the display device 28 according to the composition image information. Then, the composed image is displayed. However, since the parallax barrier 28a is overlapped with the anterior surface of the display device 28, as illustrated in Fig. 17, the driver 30 and the fellow passenger 31 can see either the first image by the first position group or the second image by the second position group.

The touch panel 28b is also overlapped with the anterior surface of the parallax barrier 28a. Thus, it is possible to accept the touch panel operation, and this point is the same as that of Embodiment 1 to 4.

Similar to Embodiment 1 and 2, an operator, whose LED between the first LED 14 and the second LED 15 is turned on, is the remote controller target.

A ROM 81 of a display apparatus 80 in the present embodiment stores the control program based on the flow chart of Fig. 16.

Next, referring to Fig. 16, operation of the display apparatus in Embodiment 5 will now be explained.

In Fig. 16, Steps 1 to 5 are the same as those of Fig. 7. However, differing from Fig. 7, after Step 5, the image composing circuit 82 composes the first and second images that are stored in the first mage memory 57 and the second image memory 59 respectively, and outputs the composed image information at Step 30. The driver 83 makes the single display device 28 display images based on the composed image information. This point is different from that of Fig. 7. Of course, as described on the above, differing from Fig. 7, the display content of the first position group and the display content of the second position group are different and displayed. In addition, at Step 10, the CPU 51 changes the operation target. Therefore, at Step 5, the ON/OFF status of the first LED 14 and the second LED 15 are made to be reversed by the CPU 51.

After Step 6, the processing is the same as that of Fig. 12 related to Embodiments 3 and 4. Thus, the duplicated explanation is omitted.

### (Embodiment 6)

Fig. 18 illustrates a view showing an area near a dashboard of a car with which a display apparatus in Embodiment 6 of the present invention is equipped. Similar to Embodiment 1, the display apparatus of the present embodiment is preferably used as a display of a car navigation device, and belongs to the type that the display has been built in before the delivery of the car.

Although it is not shown, when the mounting plate 20 and the column 21, which are similar to those of Embodiment 2, are provided, the display can be changed to the type that the display of the car navigation device installed after the delivery of the car, as similar to Embodiment 2. Thus, this method is included in the present invention.

In Embodiments 6, the first LED 14 and the second LED 15 are omitted and other contents are the same as those of Embodiment 5 (in other words, the changes of Embodiments 3 and 4 are added to Embodiment 5). Therefore, in Fig. 18, the frame 29 is similar to the frame 27 of Fig. 14, but does not possess the attachment places for the first LED 14 and the second LED 15.

In Fig. 19, it is obvious to see the following different points by comparing to Fig. 15.

A ROM 91 of a display apparatus in the present embodiment stores the control program based on the flow chart of Fig. 20.

Since the first LED 14 and the second LED 15 are omitted, the light control unit 64 is omitted.

In Embodiment 6, instead of the LED ON/OFF status in Embodiment 5, the additional images 74 and 75 are used in order to indicate that the display device is either the remote controller operation target or the touch panel operation target. In the following, it is the same as that of the matter described in Embodiments 3 and 4. In particular, in addition to the composition of Fig. 15, in Fig. 19, the additional image memory 72 and the image adding circuit 73 are added.

Next, referring to Fig. 20, operation of the display apparatus in Embodiment 6 will now be explained.

As clearly shown by comparing to Fig. 16 relating to Embodiment 5, in Embodiment 6, between Step 4 and Step 30 of Fig. 16, the image adding circuit 73 overwrites and adds the first image stored in the first image memory 57 and the second image stored in the second image memory 59 with the applicable image between the additional images 74 and 75, as shown in Fig. 20.

Moreover, at Step 8, when there is no input, the CPU 51 moves the processing to Step 20.

Others are the same as those of Fig. 16 relating to Embodiment 5.

### [Industrial Applicability]

The display apparatus relating to the present invention can be suitably used in a technical field of, for example, a display apparatus for displaying a plurality of images simultaneously, and a car navigation using thereof.

## Claims

1. A display apparatus comprising:
a display unit operable to display a first image and a second image concurrently;
a display control unit operable to determine one of the first and second images displayed by said display unit as a remote control target and the other of the first and second images displayed by said display unit as a touch operation target;
a remote control information inputting unit operable to accept remote control input concerning the one of the first and second images determined as the remote control target;
a touch control information inputting unit operable to accept touch operation input concerning the other of the first and second images determined as the touch operation target; and
a specification unit operable to specify that at least one of the first and second images has been determined as either the remote control target or the touch control target.

2. The display apparatus as defined in claim 1, wherein said display unit comprises a pair of a first display device operable to display the first image and a second display device operable to display the second image.

3. The display apparatus as defined in claim 2, wherein said touch control information inputting unit comprises a pair of a first touch panel operable to detect a touch position on said first display device and a second touch panel operable to detect a touch position on said second display device.

4. The display apparatus as defined in claim 2, wherein said specification unit comprises a light-emitting element provided relating to at least one of said first and second display devices, and
wherein said specification unit switches said light-emitting element ON or OFF to specify that at least one of the first image displayed by said first display device and the second image displayed by said second display device has been determined as either the remote control target or the touch control target.

5. The display apparatus as defined in claim 2, wherein said specification unit comprises a light-emitting element provided relating to at least one of said first and second display devices, and
wherein said specification unit determines a luminescent color of said light-emitting element to specify that at least one of the first image displayed by said first display device and the second image displayed by said second display device has been determined as either the remote control target or the touch control target.

6. The display apparatus as defined in claim 4, wherein said light-emitting element of said specification unit is provided relating to said first and second display devices, respectively.

7. The display apparatus as defined in claim 2, wherein said specification unit adds an additional image specifying that at least one of the first image displayed by said first display device and the second image displayed by said second display device has been determined as either the remote control target or the touch control target to at least one of the first image displayed by said first display device and the second image displayed by said second display device.

8. The display apparatus as defined in claim 7, wherein at least one of the first image displayed by said first display device and the second image displayed by said second display device is overlaid with the additional image by said specification unit.

9. The display apparatus as defined in claim 1, wherein said remote control information inputting unit is a remote controller.

10. The display apparatus as defined in claim 9, wherein said remote controller comprises a grip hand sensor operable to detect with which of a right hand or a left hand does an operator grip said remote controller to generate a detection result.

11. The display apparatus as defined in claim 10, wherein, based on the detection result generated by said grip hand sensor, said display control unit judges which of a driver or a fellow passenger does grip said remote controller to decide one of the driver and the fellow passenger as a person judged to grip said remote controller and the other of the driver and the fellow passenger as a person judged not to grip said remote controller, and
wherein said display control unit determines one, which arranged looking toward the person judged to grip said remote controller, of the first and second display devices as the remote control target and the other, which arranged looking toward the person judged not to grip said remote controller, of the first and second display devices as the touch operation target.

12. The display apparatus as defined in claim 1, wherein the display device has been already built in a car before delivery of the car.

13. The display apparatus as defined in claim 1, wherein the display device is built in a car after delivery of the car.

14. The display apparatus as defined in claim 1, further comprising:
a mounting plate to be fixed on a dashboard of a car; and
a column provided upward from said mounting plate,
wherein the first and second display devices are supported looking toward the driver and the fellow passenger, respectively, in a manner such that an angle between a surface of the first display device and a surface of the second display device can be changed about said column.

15. The display apparatus as defined in claim 14, wherein the angle is set from 180 degree to 360 degree.

16. The display apparatus as defined in claim 14, further comprising:
an angular velocity sensor operable to detect the angle,
wherein said display control unit, based on the angle detected by said angle sensor, determines toward which of the driver or the fellow passenger do the first and second display devices look.

17. The display apparatus as defined in claim 1, wherein only one of the first and second images can be seen from said display unit according to an angle toward which said display unit is seen.

18. The display apparatus as defined in claim 17, wherein said touch operation information inputting unit comprises a touch panel operable to detect a touch position of said display device.

19. The display apparatus as defined in claim 17, wherein said specification unit comprises a light-emitting element provided relating to at least one of the first and second images, and
wherein said specification unit switches said light-emitting element ON or OFF to specify that at least one of the first and second images has been determined as either the remote control target or the touch control target.

20. The display apparatus as defined in claim 17, wherein said specification unit comprises a light-emitting element provided relating to at least one of the first and second images, and
wherein said specification unit determines a luminescent color of said light-emitting element to specify that at least one of the first and second images has been determined as either the remote control target or the touch control target.

21. The display apparatus as defined in claim 19, wherein said light-emitting element of said specification unit is provided relating to the first and second images, respectively.

22. The display apparatus as defined in claim 18, wherein said specification unit adds an additional image specifying that at least one of the first and second images has been determined as either the remote control target or the touch control target to at least one of the first and second images.

23. The display apparatus as defined in claim 22, wherein at least one of the first and second images is overlaid with the additional image by said specification unit.

24. The display apparatus as defined in claim 18, wherein said remote control information inputting unit is a remote controller.

25. The display apparatus as defined in claim 24, wherein said remote controller comprises a grip hand sensor operable to detect with which of a right hand or a left hand does an operator grip said remote controller to generate a detection result.

26. The display apparatus as defined in claim 25, wherein, based on the detection result generated by said grip hand sensor, said display control unit judges which of a driver or a fellow passenger does grip said remote controller to decide one of the driver and the fellow passenger as a person judged to grip said remote controller and the other of the driver and the fellow passenger as a person judged not to grip said remote controller, and
wherein said display control unit determines one, which arranged looking toward the person judged to grip said remote controller, of the first and second images as the remote control target and the other, which arranged looking toward the person judged not to grip said remote controller, of the first and second images as the touch operation target.

27. The display apparatus as defined in claim 17, wherein the display device has been already built in a car before delivery of the car.

28. The display apparatus as defined in claim 1, further comprising:
a selection unit operable to output instructions for changing targets of the first and second images,
wherein said display control unit changes the targets of the first and second images according to the instructions outputted from said selection unit.

29. A navigation apparatus comprising the display device as defined in claim 1.
